(19) Europäisches Patentamt
European Patent Office
Office européen des brevets

(11) **EP 4 765 290 A1**

(12) **EUROPEAN PATENT APPLICATION**
published in accordance with Art. 153(4) EPC


(43) Date of publication:
**24.06.2026 Bulletin 2026/26**

(21) Application number: **24868680.0**

(22) Date of filing: **19.09.2024**

(51) International Patent Classification (IPC):
***H01M 10/0567*** *(2010.01)* ***H01M 10/0568*** *(2010.01)*
***H01M 10/0569*** *(2010.01)* ***H01M 10/052*** *(2010.01)*
***H01M 4/525*** *(2010.01)* ***H01M 4/48*** *(2010.01)*
***H01M 4/38*** *(2006.01)*

(52) Cooperative Patent Classification (CPC):
**H01M 4/38; H01M 4/48; H01M 4/525;**
**H01M 10/052; H01M 10/0567; H01M 10/0568;**
**H01M 10/0569;** Y02E 60/10

(86) International application number:
**PCT/KR2024/014117**

(87) International publication number:
**WO 2025/063703 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 KR 20230127481**
**13.09.2024 KR 20240125976**



(71) Applicant: **LG Energy Solution, Ltd.**
**Seoul 07335 (KR)**

(72) Inventors:
- **YEOM, Chul Eun**
**Daejeon 34122 (KR)**
- **LEE, Jung Min**
**Daejeon 34122 (KR)**
- **LEE, Chul Haeng**
**Daejeon 34122 (KR)**
- **JI, Su Hyeon**
**Daejeon 34122 (KR)**
- **KO, Jin Hyuck**
**Daejeon 34122 (KR)**

(74) Representative: **Hoffmann Eitle**
**Patent- und Rechtsanwälte PartmbB**
**Arabellastraße 30**
**81925 München (DE)**


(54) **NON-AQUEOUS ELECTROLYTE AND LITHIUM SECONDARY BATTERY COMPRISING SAME**


(57) The present disclosure provides a non-aqueous electrolyte comprising a lithium salt, an organic solvent and a compound of Formula 1 below as an additive:

[Formula 1]

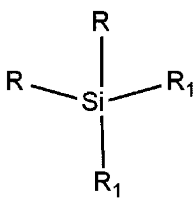

wherein, In Formula 1, $R_1$ is any one selected from the group consisting of F, R, an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, OR' and OCOR', and R' is any one selected from the group consisting of an alkyl group having 1 to 10 carbon atoms which can be substituted with one or more fluorines, an alkenyl group having 2 to 10 carbon atoms which can be substituted with one or more fluorines, and an alkynyl group having 2 to 10 carbon atoms which can be substituted with one or more fluorines,
wherein in Formula 1 and $R_1$, R has a structure represented by Formula 2 below, and

[Formula 2]


EP 4 765 290 A1

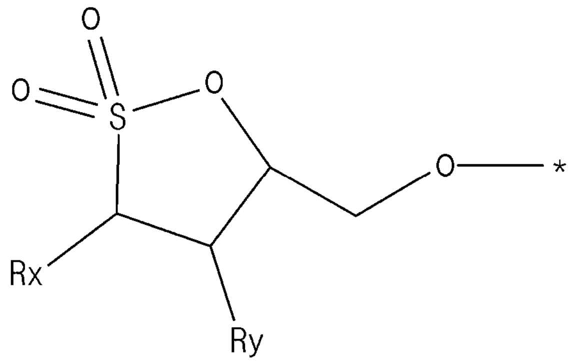

wherein, in Formula 2, Rx and Ry are each independently either H or F.

## Description

[TECHNICAL FIELD]

Cross-reference to Related Applications

This application claims priority from Korean Patent Application No. 10-2023-0127481, filed on September 22, 2023 and Korean Patent Application No. 10-2024-0125976, filed on September 13, 2024, the entire contents of which are incorporated by reference herein.

[TECHNICAL FIELD]

The present disclosure relates to a non-aqueous electrolyte and a lithium secondary battery comprising the same.

[BACKGROUND ART]

Recently, there is a growing demand for high-capacity, high-output and high-stability secondary batteries as the application area of lithium secondary batteries has rapidly expanded to not only power supply for electronic devices such as electric, electronics, communication, and computers, but also power storage and supply for large-area devices such as automobiles and power storage devices.

In particular, the significance of high capacity, high output, and long life characteristics is growing in lithium secondary batteries used for vehicles. In order to achieve the high capacity of secondary batteries, it may use a high-Ni content positive electrode active material having high energy density but low stability, or drive the secondary batteries at high voltage.

However, when the secondary battery is driven under the above conditions, as charging and discharging proceeds, the surface structure of an electrode or a film formed on the surface of positive/negative electrodes deteriorates due to a side reaction caused by electrolyte deterioration, and thus transition metal ions may be eluted from the surface of the positive electrode. As described above, since the eluted transition metal ions are electro-deposited on the negative electrode and reduce the passivation ability of a solid electrolyte interphase (SEI), there occurs a problem in that the negative electrode deteriorates.

This deterioration phenomenon of the secondary battery tends to be further accelerated when the potential of the positive electrode is increased or when the battery is exposed to heat generated during the operation of the battery or the external high-temperature environment.

In addition, when the lithium secondary battery is continuously used for a long period of time or left to stand at high temperatures, gas is generated, thereby causing a so-called swelling phenomenon in which the thickness of the battery increases, and it is known that the amount of gas generated in this case depends on the state of the SEI.

Therefore, in order to solve the above problem, research and development are being conducted on methods capable of suppressing the elution of metal ions from the positive electrode and forming a stable SEI film on the negative electrode, thereby reducing the swelling phenomenon in secondary batteries, and increasing durability at high temperatures.

[DISCLOSURE OF THE INVENTION]

[TECHNICAL PROBLEM]

As a result of conducting diverse research to solve the above problem, the present disclosure aims to provide an additive for a non-aqueous electrolyte capable of suppressing the degradation of a positive electrode, reducing side reactions between a positive electrode and an electrolyte, and forming a stable SEI film on a negative electrode.

Furthermore, the present disclosure aims to provide a non-aqueous electrolyte with improved stability at high temperatures by including the additive for a non-aqueous electrolyte.

In addition, the present disclosure aims to provide a lithium secondary battery with improved overall performance by having improved high-temperature cycle properties and high-temperature storage properties by including the above-described non-aqueous electrolyte.

[TECHNICAL SOLUTION]

[1] The present disclosure provides a non-aqueous electrolyte comprising a lithium salt, an organic solvent and an additive for a non-aqueous electrolyte represented by Formula 1 below:

[Formula 1]

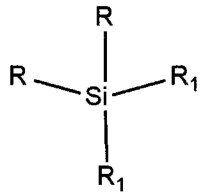

In Formula 1 above, $R_1$ is any one selected from the group consisting of F, R, an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, OR' and OCOR', and R' is any one selected from the group consisting of an alkyl group having 1 to 10 carbon atoms which can be substituted with one or more fluorines, an alkenyl group having 2 to 10 carbon atoms which can be substituted with one or more fluorines, and an alkynyl group having 2 to 10 carbon atoms which can be substituted with one or more fluorines, and R has a structure represented by Formula 2 below.

[Formula 2]

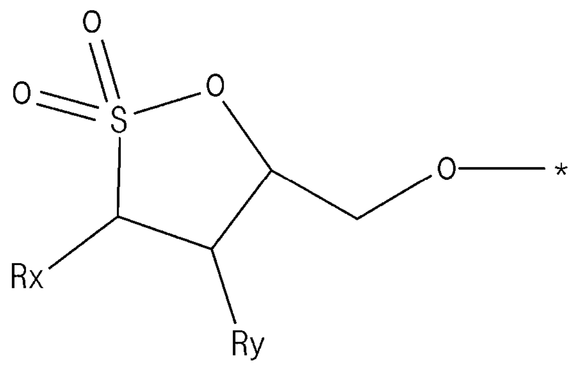

In Formula 2 above, Rx and Ry are each independently either H or F.

[2] The present disclosure may provide a non-aqueous electrolyte, wherein in the above [1], R has a structure represented by Formula 2-1 below.

[Formula 2-1]

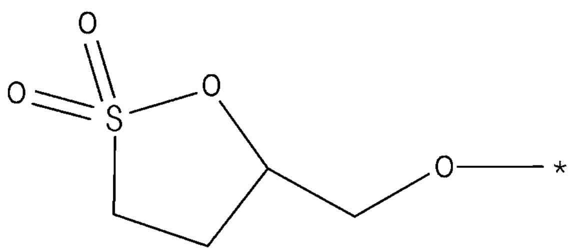

.

[3] The present disclosure may provide a non-aqueous electrolyte, wherein in the above [1] or [2], the compound represented by Formula 1 above is a compound represented by Formula 1a below:

[Formula 1a]

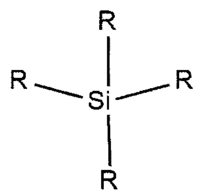

In Formula 1a above, R has a structure represented by Formula 2-1 below.

[Formula 2-1]

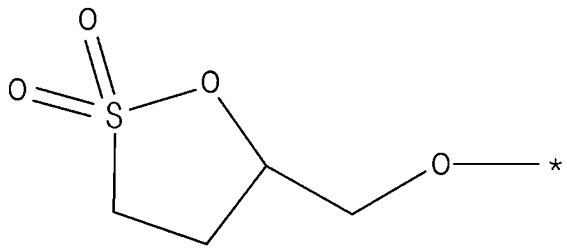

.

[4] The present disclosure may provide a non-aqueous electrolyte, wherein, in any one of the above [1] to [3], the compound represented by Formula 1 above is a compound represented by Formula 1-1 below.

[Formula 1-1]

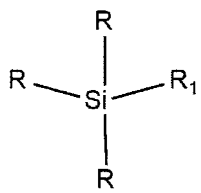

In Formula 1-1 above, $R_1$ is any one selected from the group consisting of an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, and OR'; R' is any one selected from the group consisting of an alkyl group having 1 to 10 carbon atoms which can be substituted with one or more fluorines, an alkenyl group having 2 to 10 carbon atoms which can be substituted with one or more fluorines, and an alkynyl group having 2 to 10 carbon atoms which can be substituted with one or more fluorines; and R has a structure represented by Formula 2-1 below.

[Formula 2-1]

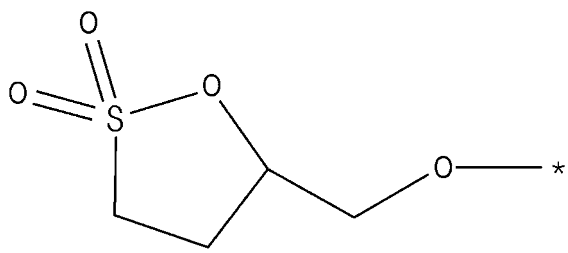

[5] The present disclosure may provide a non-aqueous electrolyte, wherein, in any one of the above [1] to [4], the

compound represented by Formula 1-1 above is any one selected from the group consisting of compounds represented by Formulas 1-1a to 1-1e below.

[Formula 1- 1a]

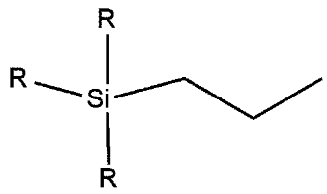

[Formula 1-1b]

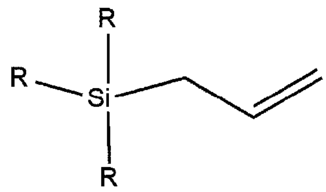

[Formula 1-1c]

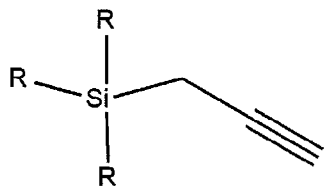

[Formula 1-1d]

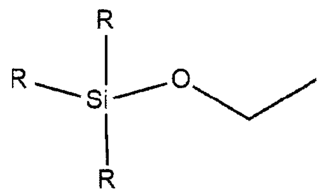

[Formula 1-1e]

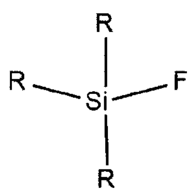

In Formulas 1-1a to 1-1e above, R has a structure represented by Formula 2-1 below.

[Formula 2-1]

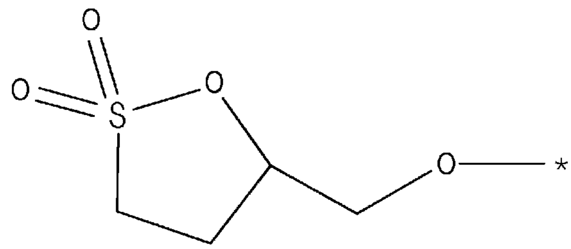

[6] The present disclosure may provide a non-aqueous electrolyte, wherein, in any one of the above [1] to [5], $R_1$ is any one selected from the group consisting of an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, and OR'; R' is any one selected from the group consisting of an alkyl group having 1 to 10 carbon atoms which can be substituted with one or more fluorines, an alkenyl group having 2 to 10 carbon atoms which can be substituted with one or more fluorines, and an alkynyl group having 2 to 10 carbon atoms which can be substituted with one or more fluorines; and R has a structure represented by Formula 2-1 below.

[Formula 2-1]

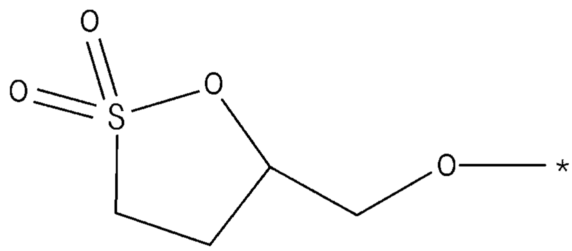

.

[7] The present disclosure may provide a non-aqueous electrolyte, wherein, in any one of the above [1] to [6], the compound represented by Formula 1 above is any one selected from the group consisting of compounds represented by Formulas 1-2a to 1-2d below.

[Formula 1- 2a]

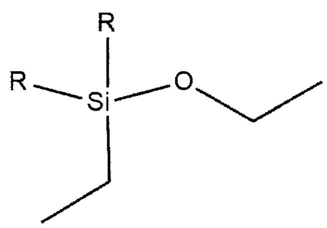

[Formula 1-2b]

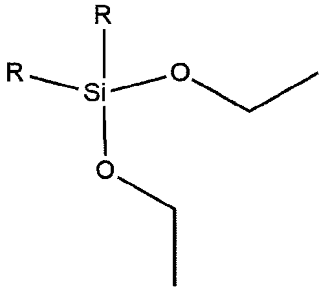

[Formula 1-2c]

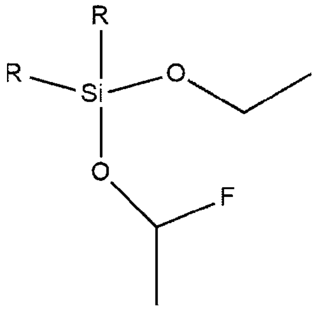

[Formula 1-2d]

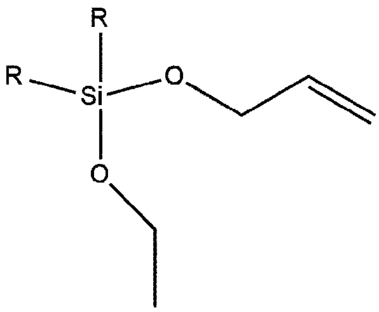

R has a structure represented by Formula 2-1 below.

[Formula 2-1]

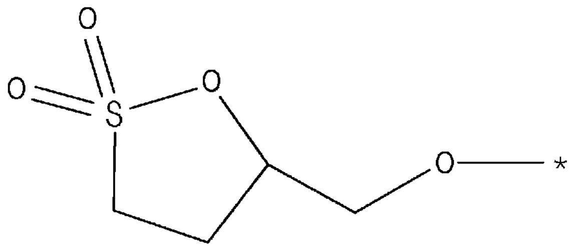

.

[8] The present disclosure may provide a non-aqueous electrolyte, wherein in any one of the above [1] to [7], the compound represented by Formula 1 above is included in an amount of 0.1 parts by weight to 5 parts by weight based on 100 parts by weight of the non-aqueous electrolyte.

[9] The present disclosure may provide a non-aqueous electrolyte, wherein, in any one of the above [1] to [8], the lithium salt is one or more selected from $LiPF_6$, LiCl, LiBr, LiI, $LiBF_4$, $LiClO_4$, $LiB_{19}Cl_{10}$, $LiAlCl_4$, $LiAlO_2$, $LiSO_3CH_3$,

$LiSO_3CF_3$, $LiCO_2CH_3$, $LiCO_2CF_3$, $LiAsF_6$, $LiSbF_6$, $LiN(SO_2F)_2$, $LiN(SO_2CF_2CF_3)_2$ and $LiN(SO_2CF_3)_2$.

[10] The present disclosure may provide a non-aqueous electrolyte, wherein in any one of the above [1] to [9], the lithium salt is included at a mole concentration of 0.5 M to 4.0 M.

[11] The present disclosure provides a non-aqueous electrolyte, wherein in any one of the above [1] to [10], the organic solvent includes at least one selected from the group consisting of a cyclic carbonate-based organic solvent, a linear carbonate-based organic solvent, a linear ester-based organic solvent, and a cyclic ester-based organic solvent.

[12] The present disclosure provides a non-aqueous electrolyte, further comprising one or more selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound as an additive in any one of the above [1] to [11].

[13] The present disclosure may provide a lithium secondary battery comprising a positive electrode; a negative electrode, and any one of the non-aqueous electrolytes in the above [1] to [12].

[14] The present disclosure may provide a lithium secondary battery, wherein in the above [13], the positive electrode includes a lithium-nickel-based oxide represented by [Formula 3] below as the positive electrode active material.

[Formula 3] $Li_aNi_bCo_cM^1_dM^2_eO_2$

In Formula 1 above, $M^1$ is Mn, Al or a combination thereof, and $M^2$ is one or more selected from the group consisting of Zr, W, Ti, Mg, Ca, Sr, and Ba, where $0.8 \leq a \leq 1.2$, $0.8 \leq b < 1$, $0 < c < 0.2$, $0 < d < 0.2$, and $0 \leq e \leq 0.1$.

[15] The present disclosure may provide a lithium secondary battery, wherein in the above [13] or [14], the negative electrode includes any one or more selected from the group consisting of Si, Si-C and $SiO_x (0 < x \leq 2)$ as the negative electrode active material.

[ADVANTAGEOUS EFFECTS]

The compound represented by Formula 1 provided as an additive for a non-aqueous electrolyte of the present disclosure is an additive that addresses the problems of 1,3-propane sultone, which is widely used as a film-forming electrolyte additive. 1,3-propane sultone increases the resistance of lithium secondary batteries, making it difficult to add in large quantities to the electrolyte, and has the problem of generating toxic substances as byproducts. As a result, 1,3-propane sultone has the problem of deteriorating the output characteristics of lithium secondary batteries, and it has been difficult to obtain sufficient longlife properties because it is difficult to add in large quantities.

The compound represented by Formula 1 provided as the additive for a non-aqueous electrolyte of the present disclosure contains two or more R structures derived from 1,3-propane sultone in the molecule, thereby forming a large amount of a robust film on the positive and negative electrodes without excess application, thereby allowing to provide a lithium secondary battery with excellent high-voltage life characteristics, high-temperature life characteristics, and high-temperature durability.

In addition, the compound of Formula 1 may reduce the generation of toxic byproducts by linking a linker containing Si to the 3rd carbon which causes the toxicity-inducing reaction of 1,3-propane sultone. Since the compound of Formula 1 can have four bonds, the film formed from the compound of Formula 1 has high density and excellent durability. Accordingly, the compound of Formula 1 may form stable CEI (Cathode Electrolyte Interface) and SEI (Solid Electrolyte Interphase) films on the positive and negative electrode surfaces. Therefore, it can prevent the elution of transition metals caused by the deterioration of the positive electrode active material at high voltage and prevent the deterioration of the negative electrode by suppressing the deterioration of the passivation ability of the SEI at high temperatures.

Therefore, when the non-aqueous electrolyte of the present disclosure including the compound of the Formula 1 is used, an electrode-electrolyte interface that is stable even at high temperatures and has low resistance can be formed, which improves high-temperature cycle properties and high-temperature storage properties, and thus a lithium secondary battery with improved overall performance may be implemented.

[MODE FOR CARRYING OUT THE INVENTION]

It will be understood that terms or words used in the present disclosure and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

It will be further understood that the terms "include," "comprise," or "have" in this disclosure specify the presence of stated features, numbers, steps, elements, or combinations thereof, but do not preclude the presence or addition of one or more other features, numbers, steps, elements, or combinations thereof.

Meanwhile, before describing aspects of the present disclosure, unless otherwise specified in the present disclosure, the expression "*" denotes the same or different atom or a portion connected between ends of a formula.

Also, the expressions "a" and "b" in the description of "a to b carbon atoms" in the disclosure each denote the number of carbon atoms included in a specific functional group. That is, the functional group may include "a" to "b" carbon atoms. For example, an "alkyl group having 1 to 5 carbon atoms" refers to an alkyl group including carbon atoms with a carbon number of 1 to 5, that is, $-CH_3$, $-CH_2CH_3$, $-CH_2CH_2CH_3$, $-CH(CH_3)_2$, $-CH(CH_3)CH_2CH_3$, $-CH(CH_2CH_3)_2$ and the like.

In addition, in the present specification, an alkyl group, an alkenyl group, or an alkynyl group may all be substituted or unsubstituted. Unless otherwise defined in the specification, the expression "substitution" denotes that at least one hydrogen bonded to carbon is substituted with an element other than hydrogen, for example, a halogen atom such as F and Cl.

Hereinafter, the present disclosure will be described in more detail.

The non-aqueous electrolyte and/or lithium secondary battery according to the present disclosure may include at least one of the constitutions disclosed below, and may include any combination between technically possible constitutions among the following constitutions.

## Non-aqueous electrolyte

The non-aqueous electrolyte of the present disclosure comprises a lithium salt, an organic solvent and an additive for a non-aqueous electrolyte represented by Formula 1 below:

[Formula 1]

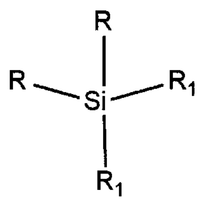

In Formula 1 below, $R_1$ is any one selected from a group consisting of F, R, an alkyl group having 1 to 10 carbon atoms in which can be substituted with one or more fluorines, an alkenyl group having 2 to 10 carbon atoms which can be substituted with one or more fluorines, and an alkynyl group having 2 to 10 carbon atoms which can be substituted with one or more fluorines.

In Formula 1 and $R_1$ above, R has a structure represented by Formula 2 below. The R group of the present disclosure has a structure, in which the linker is connected to the 3rd carbon of propane sultone, thereby increasing the overall length of the additive. This allows for the formation of a film with uniform components distributed over a wide area of the positive/negative electrodes when applying the additive of the present disclosure.

[Formula 2]

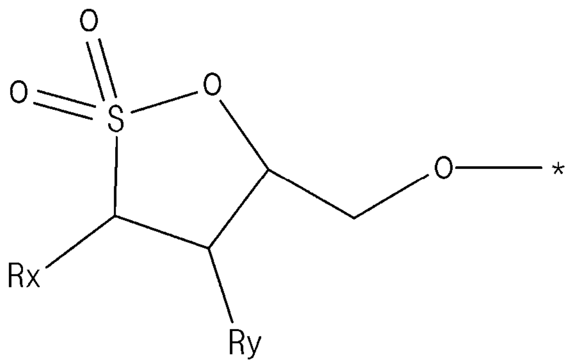

In Formula 2 above, Rx and Ry are each independently either H or F.

Specifically, the compound of Formula 2 above may have a structure represented by Formula 2-1 below.

[Formula 2-1]

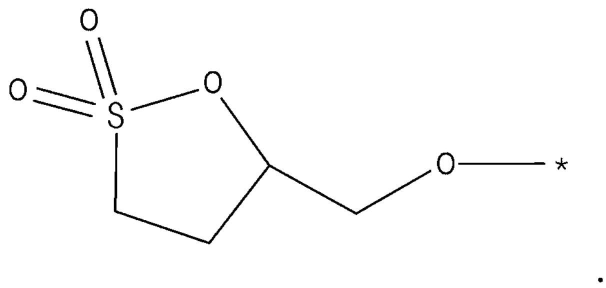

The compound of Formula 1 above contains two or more R structures derived from 1,3-propane sultone in the molecule, thereby forming a large amount of a robust film on the positive and negative electrodes without applying it in excess, which enable to provide a lithium secondary battery with excellent high-voltage life properties, high-temperature life properties, and high-temperature durability.

In addition, the compound of Formula 1 may reduce the generation of toxic byproducts by linking a linker containing Si to the 3rd carbon which causes the toxicity-inducing reaction of 1,3-propane sultone. Since the compound of Formula 1 can have four bonds, the film formed from the compound of Formula 1 has high density and excellent durability. Accordingly, the compound of Formula 1 may form stable CEI (Cathode Electrolyte Interface) and SEI (Solid Electrolyte Interphase) films on the positive and negative electrode surfaces. Therefore, the deterioration of the negative electrode can be prevented by suppressing the successive structural collapse caused by oxygen release from the positive electrode at high temperatures, while simultaneously suppressing the deterioration of the passivation ability of the SEI.

Therefore, when the non-aqueous electrolyte of the present disclosure including the compound of the Formula 1 is used, an electrode-electrolyte interface that is stable even at high temperatures and has low resistance can be formed, which improves high-temperature cycle properties and high-temperature storage properties, and thus a lithium secondary battery with improved overall performance may be implemented.

Specifically, the compound represented by Formula 1 above may be a compound of Formula 1a below.

[Formula 1a]

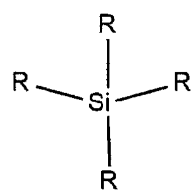

In Formula 1a above, R may have a structure represented by Formula 2-1 below.

[Formula 2-1]

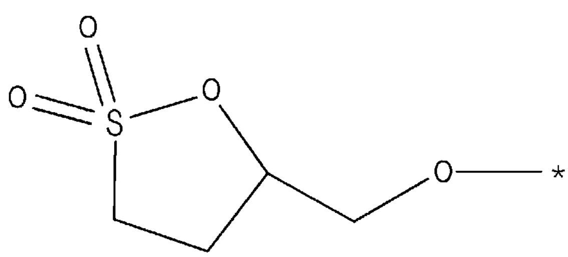

Specifically, the compound represented by Formula 1 above may be a compound of Formula 1-1 below.

[Formula 1-1]

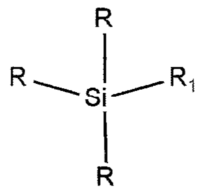

In Formula 1-1 above, $R_1$ is any one selected from the group consisting of F, an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, and OR', and R' is any one selected from the group consisting of an alkyl group having 1 to 10 carbon atoms which can be substituted with one or more fluorines, an alkenyl group having 2 to 10 carbon atoms which can be substituted with one or more fluorines, and an alkynyl group having 2 to 10 carbon atoms which can be substituted with one or more fluorines.

In Formula 1-1 above, R may have a structure represented by Formula 2-1 below.

[Formula 2-1]

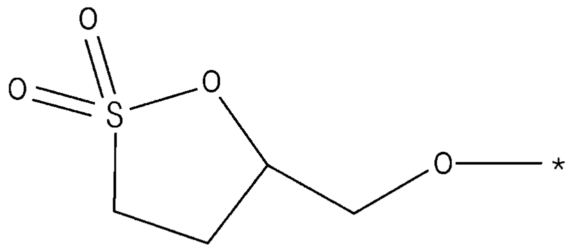

Specifically, the compound represented by Formula 1-1 above may be any one of the compounds represented by Formula 1-1a to 1-1e below.

[Formula 1- 1a]

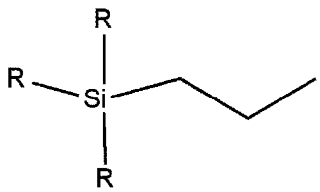

[Formula 1-1b]

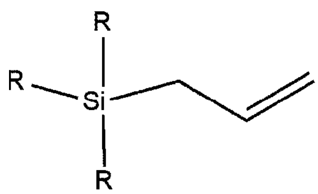

[Formula 1-1c]

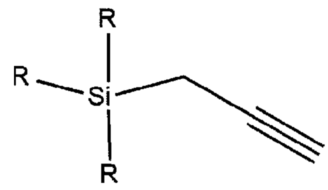

[Formula 1-1d]

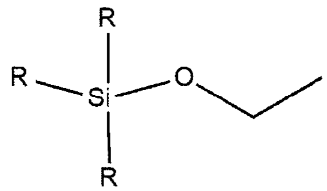

[Formula 1-1e]

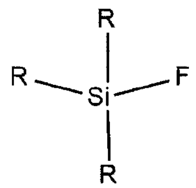

In Formula 1-1a to Formula 1-1e above, R may have a structure represented by Formula 2-1 below.

[Formula 2- 1]

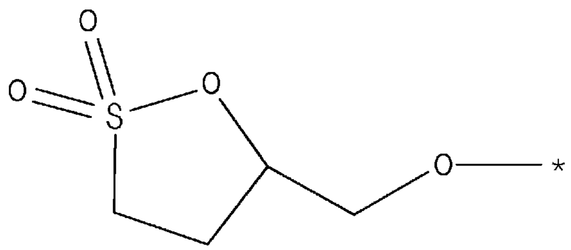

In Formula 1 above, $R_1$ is any one selected from the group consisting of an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, and OR'; R' is any one selected from the group consisting of an alkyl group having 1 to 10 carbon atoms which can be substituted with one or more fluorines, an alkenyl group having 2 to 10 carbon atoms which can be substituted with one or more fluorines, and an alkynyl group having 2 to 10 carbon atoms which can be substituted with one or more fluorines; and R has a structure represented by Formula 2-1 below.

[Formula 2-1]

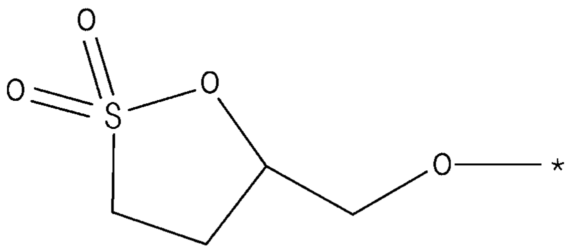

.

Specifically, the compound of Formula 1 above may be any one of the compounds represented by Formulas 1-2a to 1-2d below.

[Formula 1- 2a]

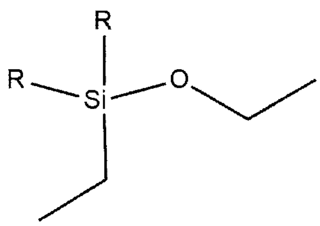

[Formula 1-2b]

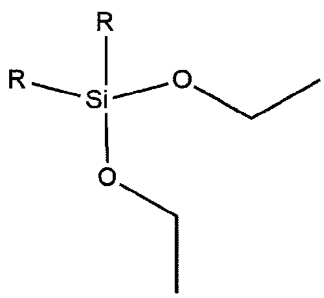

[Formula 1-2c]

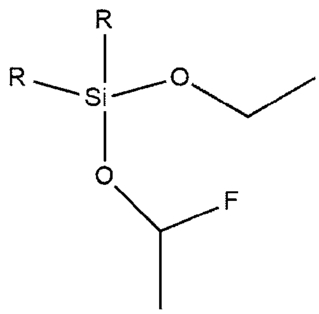

[Formula 1-2d]

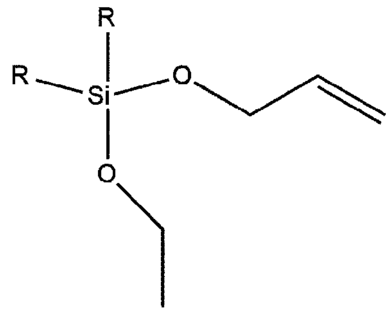

In Formula 1-2a to Formula 1-2d above, R may be shown as Formula 2-1 below.

[Formula 2- 1]

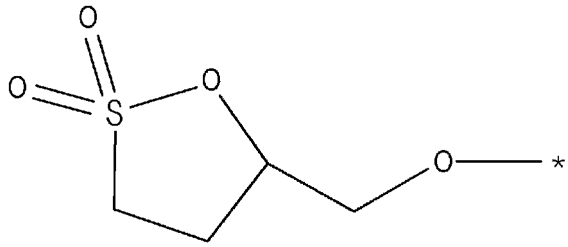

An additive for a non-aqueous electrolyte according to the present disclosure may be included in an amount of 0.1 parts by weight to 5 parts by weight, preferably 0.1 parts by weight to 3 parts by weight, more preferably 0.1 parts by weight to 1 parts by weight, based on 100 parts by weight of the non-aqueous electrolyte. When the content of the compound represented by Formula 1 above satisfies the above range, there is a sufficient effect of forming films on the positive and negative electrodes, which suppresses the elution of transition metals from the positive electrode active material and the deterioration of the negative electrode. In addition, the lithium mobility of the electrolyte is appropriate, thereby achieving the effect of reduced resistance in the lithium secondary battery.

The lithium salt included in the non-aqueous electrolyte of the present disclosure is used as an electrolyte salt in a lithium secondary battery, and is used as a medium for transferring ions. Typically, the lithium salt may include Li+ as cations, and may include at least one selected from $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$ as anions.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (lithium bis(fluorosulfonyl)imide, LiFSI), $LiN(SO_2CF_2CF_3)_2$ (lithium bis(perfluoroethanesulfonyl)imide, LiBETI) and $LiN(SO_2CF_3)_2$ (lithium bis(trifluoromethane sulfonyl)imide, LiTFSI), or a mixture of two or more thereof. In addition to these, lithium salts typically used in an electrolyte for a lithium secondary battery may be used without limitation.

The lithium salt may be appropriately changed in a normally usable range, but in order to obtain an optimum effect of forming an anti-corrosive film on the electrode surface, the lithium salt may be included in the electrolyte at a concentration of 0.5 M to 4.0 M, preferably 0.5 M to 3.0 M, and more preferably 0.8 M to 2.0 M. When the concentration of the lithium salt satisfies the above range, there is a sufficient effect of improving cycle properties during the high-temperature storage of a lithium secondary battery, and the viscosity of the non-aqueous electrolyte is suitable so that the wettability of the electrolyte may be improved.

The organic solvent includes at least one selected from a cyclic carbonate-based organic solvent, a linear carbonate-based organic solvent, a linear ester-based organic solvent and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent having high viscosity and high permittivity, and is an organic solvent capable of dissociating a lithium salt well in an electrolyte, and specific examples thereof may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and among them may include ethylene carbonate.

Furthermore, the linear carbonate-based organic solvent is an organic solvent having low viscosity and low permittivity, wherein typical examples thereof may include at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and specifically it may include ethyl methyl carbonate (EMC).

In addition, to prepare an electrolyte with a high ionic conductivity, the organic solvent may further include at least one ester-based organic solvent selected from a linear ester-based organic solvent and a cyclic ester-based organic solvent in addition to at least one carbonate-based organic solvent selected from the cyclic carbonate-based organic solvent and linear carbonate-based organic solvent.

Specific examples of the linear ester-based organic solvent may include at least one selected from methyl acetate, ethyl acetate, propyl acetate, methyl propionate, ethyl propionate, propyl propionate, and butyl propionate.

Also, the cyclic ester-based organic solvent may include at least one organic solvent selected from the group consisting of $\gamma$-butyrolactone, $\gamma$-valerolactone, $\gamma$-caprolactone, $\sigma$-valerolactone, and $\varepsilon$-caprolactone.

Meanwhile, the organic solvent may be used by adding organic solvents commonly used in non-aqueous electrolytes without limitation, if necessary. For example, it may further include at least one organic solvent selected from an ether-based organic solvent, a glyme-based solvent, and a nitrile-based organic solvent.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl)-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, digylme, triglyme, and tetra-glyme (TEGDME) as a solvent with low reactivity with metals, but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

In addition, in order to prevent a non-aqueous electrolyte from being decomposed to cause collapse of a negative electrode in a high output environment, or further improve low-temperature high-rate discharge characteristics, high-temperature stability, overcharge protection, and a battery swelling suppression effect at high temperatures, the non-aqueous electrolyte of the present disclosure may further include known electrolyte additives in the above non-aqueous electrolyte, if necessary.

Examples of the additional electrolyte additives may be at least one selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate.

The halogen-substituted carbonate-based compound may include fluoroethylene carbonate (FEC).

The sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include one or more compounds selected from the group consisting of lithium difluoro (bisoxalato)phosphate, lithium difluorophosphate, tris(trimethylsilyl) phosphate, tris(trimethylsilyl)phosphite, tris(2,2,2-trifluoroethyl)phosphate, and tris(2,2,2-trifluoroethyl)phosphite.

The borate-based compound may include tetraphenylborate, lithium oxalyldifluoroborate(LiODFB), and lithium bis(oxalato) borate ($LiB(C_2O_4)_2$, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, and the amine-based compound may include triethanolamine or ethylenediamine, and the silane-based compound may include tetravinylsilane.

The lithium salt-based compound is a compound different from the lithium salt included in the non-aqueous electrolyte, and may be lithium difluorophosphate (LiDFP), $LiPO_2F_2$ or $LiBF_4$ or the like.

Among the electrolyte additives, when a combination of vinylene carbonate (VC), 1,3-propane sultone (PS), and ethylene sulfate (Esa) is included, it is possible to form a more robust SEI film on the surface of a negative electrode during

the initial activation process of a secondary battery, and to suppress the generation of gas which may be generated due to the decomposition of an electrolyte at high temperatures, thereby improving high-temperature stability of the secondary battery.

Meanwhile, the additional electrolyte additives may be used as a mixture of two or more thereof, and may be included in an amount of 0.1 wt% to 10 wt%,specifically 0.2 wt% to 8 wt%, and preferably 0.5 wt% to 8 wt% based on a total weight of the non-aqueous electrolyte. When the content of the above additional electrolyte additives satisfies the above range, there is a more excellent effect of improving ion conductivity and cycle properties.

## Lithium Secondary Battery

The present disclosure also provides a lithium secondary battery comprising the above non-aqueous electrolyte.

Specifically, the lithium secondary battery includes a positive electrode including a positive electrode active material, a negative electrode including a negative electrode active material, a separator interposed between the positive electrode and the negative electrode, and the above-described non-aqueous electrolyte.

At this time, the lithium secondary battery of the present disclosure may be manufactured by a typical method known in the art. For example, the lithium secondary battery of the present disclosure maybe manufactured by forming an electrode assembly in which a positive electrode, a negative electrode, and a separator between the positive electrode and the negative electrode are sequentially stacked, followed by inserting the electrode assembly in a battery case, and then injecting the non-aqueous electrolyte according to the present disclosure thereto.

### (1) Positive Electrode

The positive electrode may be manufactured by coating a positive electrode mixture slurry including a positive electrode active material, a binder, a conductive material, a solvent, and the like on a positive electrode current collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, and may specifically include a lithium metal oxide including one or more metals such as cobalt, manganese, nickel, or aluminum and lithium. More specifically, the lithium metal oxide may be a lithium-manganese-based oxide(e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (where 0<Y<1), $LiMn_{2-z}Ni_zO_4$(where 0<Z<2), etc.), a lithium-nickel-cobalt-based oxide (e.g., $LiNi_{1-Y1}Co_{Y1}O_2$(where 0<Y1<1), etc.), a lithium-manganese-cobalt-based oxide (e.g., $LiCo_{1-Y2}Mn_{Y2}O_2$(where 0<Y2<1), $LiMn_{2-Z1}Co_{Z1}O_4$(where 0<Z1 <2), etc.), a lithium-nickel-manganese-cobalt-based oxide (e.g., $Li(Ni_pCo_qMn_r)O_2$(where 0 < p < 1, 0 < q < 1, 0 < r < 1, p+q+r=1) or $Li(Ni_{p1}Co_{q1}Mn_{r1})O_4$(where 0<p1<2, 0<q1<2, 0<r1<2, p1+q1+r1=2), etc.), or a lithium-nickel-cobalt-transition metal (M) oxide (e.g., $Li(Ni_{p2-}Co_{q2}Mn_{r2}M_{s2})O_2$ (where M is selected from the group consisting of Al, Fe, V, Cr, Ti, Ta, Mg and Mo, p2, q2, r2 and s2 are each an atomic fraction of stand-alone elements, where 0<p2< 1, 0<q2<1, 0<r2<1, 0<s2<1, p2+q2+r2+s2=1), and the like) and any one thereof or a compound of two or more thereof may be included.

Among these, due to the fact that the capacity properties and stability of a battery may be increased, the lithium metal oxide may be $LiCoO_2$, $LiMnO_2$, $LiNiO_2$, a lithium nickel-manganese-cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ and $Li(Ni_{0.8}Mn_{0.1}Co_{0.1})O_2$, etc.), a lithium-nickel-cobalt-aluminum oxide (e.g. , $Li(Ni_{0.8}Co_{0.15}Al_{0.05})O_2$, etc.), or a lithium-nickel-manganese-cobalt-aluminum oxide (e.g., $Li(Ni_{0.86}Co_{0.05}Mn_{0.07}Al_{0.02})O_2$) or the like, and any one thereof or a mixture of two or more thereof may be used.

Among them, a positive electrode active material with a Ni content of 80 atm% or more may be used to increase the capacity characteristics of the battery the most. For example, the lithium transition metal oxide may include a compound represented by Formula 3 below.

[Formula 3] $Li_xNi_aCo_bM^1_cM^2_dO_2$

In Formula 3 above, $M^1$ may be one or more selected from Mn and Al, and preferably may be Mn or a combination of Mn and Al.

$M^2$ may be one or more selected from the group consisting of Zr, B, W, Mg, Ce, Hf, Ta, La, Ti, Sr, and Ba.

x represents an atomic fraction of lithium in a lithium transition metal oxide, and may be $0.90 \leq x \leq 1.1$, preferably $0.95 \leq x \leq 1.08$, and more preferably $1.0 \leq x \leq 1.08$.

a represents an atomic fraction of nickel among all metal elements except for lithium in the lithium transition metal oxide, and may be $0.80 \leq a < 1.0$, preferably $0.80 \leq a \leq 0.95$, and more preferably $0.80 \leq a \leq 0.90$. When the content of the nickel satisfies the above range, high capacity characteristics may be achieved.

b represents an atomic fraction of cobalt among all metal elements except for lithium in the lithium transition metal oxide, and may be $0<b<0.2$, $0<b\leq 0.15$, or $0.01\leq b\leq 0.10$.

c represents an atomic fraction of the element $M^1$ among all metal elements except for lithium in the lithium transition metal oxide, and may be $0<c<0.2$, $0<c\leq 0.15$, or $0.01\leq c\leq 0.10$.

d represents an atomic fraction of the element $M^2$ among all metal elements except for lithium in the lithium transition metal oxide, and may be $0\leq d\leq 0.1$ or $0\leq d\leq 0.05$.

The positive electrode active material may be included in an amount of 60 wt% to 99 wt%, preferably 70 wt% to 99 wt%, and more preferably 80 wt% to 98 wt%, based on the total weight of the solids excluding the solvent in the positive electrode mixture slurry.

The binder is a component for assisting in coupling between an active material and a conductive material, and coupling to a current collector.

Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene monomer (EPDM), a sulfonated EPDM, a styrene-butadiene rubber, a fluoro rubber, and various copolymers thereof.

Typically, the binder may be included in an amount of 1 to 20 wt%, preferably 1 to 15 wt%, and more preferably 1 wt% to 10 wt%, based on the total weight of the solids excluding the solvent in the positive electrode mixture slurry.

The conductive material is a component for further improving the conductivity of the positive electrode active material, and may be added in an amount of 1 to 20 wt% based on the total weight of the solids in the positive electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite with a well-developed crystal structure, artificial graphite, graphite, or the like; conductive fibers such as carbon fiber or metal fiber; conductive powder such as fluorocarbon powder, aluminum powder, and nickel powder; a conductive whiskers such as zinc oxide and potassium titanate; conductive metal oxides such as titanium oxide; conductive materials such as a polyphenylene derivative, and the like may be used.

Typically, the conductive material may be included in an amount of 1 to 20 wt %, preferably 1 to 15 wt%, and more preferably 1 wt% to 10 wt%, based on the total weight of the solids excluding the solvent in the positive electrode mixture slurry.

The solvent may include an organic solvent such as N-methyl-2-pyrrolidone (NMP), and may be used in an amount such that a preferred viscosity is achieved when the positive electrode active material, and optionally, a binder, a conductive material, and the like are included. For example, the solvent may be included in an amount such that the concentration of a solid including the positive electrode active material, and optionally the binder and the conductive material is 50 wt% to 95 wt%, preferably 70 wt% to 95 wt%, and more preferably 70 wt% to 90 wt%.

**(2) Negative Electrode**

The negative electrode may be manufactured by, for example, coating a negative electrode mixture slurry containing a negative electrode active material, a binder, a conductive material, a solvent, and the like on a negative electrode current collector, or a graphite electrode made of carbon (C) or a metal itself may be used as the negative electrode.

For example, when the negative electrode is manufactured by coating a negative electrode mixture slurry on a negative electrode current collector, the negative electrode current collector generally has a thickness of 3 to 500 μm. The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, as in the positive electrode current collector, microscopic irregularities may be formed on the surface to improve the binding force of a negative electrode active material, and the negative electrode current collector may be used in various shapes such as a film, a sheet, a foil, a net, a porous body, a foam body, and a non-woven fabric body.

Furthermore, the negative electrode active material may include at least one selected from lithium metal, a carbon material capable of reversibly intercalating/deintercalating lithium ions, metal or an alloy of lithium and the metal, a metal composite oxide, a material which may be doped and undoped with lithium, or a transition metal oxide.

As the carbon material capable of reversibly intercalating/deintercalating the lithium ions, a carbon-based negative electrode active material generally used in a lithium ion secondary battery may be used without particular limitation, and as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon,

mesophase pitch carbide, fired cokes and the like.

As the metal or the alloy of lithium and the metal, a metal selected from Cu, Ni, Na, K, Rb, Cs, Fr, Be, Mg, Ca, Sr, Si, Sb, Pb, In, Zn, Ba, Ra, Ge, Al and Sn, or an alloy of lithium and the metal may be used.

Any one from PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0\leq x\leq 1$), $Li_xWO_2$($0\leq x\leq 1$) and $Sn_xMe_{1-x}Me'_yO_z$ (Me: Mn, Fe, Pb, Ge; Me': Al, B, P, Si, Groups I, II and III elements of the periodic table, or halogen; $0<x\leq 1$; $1\leq y\leq 3$; $1\leq z\leq 8$) may be used as the metal composite oxide.

The material, which may be doped and undoped with lithium, may include Si, $SiO_x$($0<x\leq 2$), a Si-Y alloy (where Y is an element selected from alkali metal, alkaline earth metal, a Group 13 element, a Group 14 element, transition metal, a rare earth element, or a combination thereof, and is not Si), Sn, $SnO_2$, Sn-Y (where Y is an element selected from alkali metal, alkaline earth metal, a Group 13 element, a Group 14 element, transition metal, a rare earth element, or a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithiumcontaining titanium composite oxide (LTO), vanadium oxide, and lithium vanadium oxide.

Among these, the negative electrode active material may be a mixture of graphite and a silicon-based active material. The silicon-based active material may be Si, $SiO_x$($0<x\leq 2$) or a Si-C composite. In terms of increasing the capacity of a lithium secondary battery, the graphite and silicon-based active material may be included in a weight ratio of 99.5 : 0.5 to 70 : 30.

The negative electrode active material may be included in an amount of 60 wt % to 99 wt%, preferably 70 wt % to 99 wt%, and more preferably 80 wt% to 98 wt%, based on the total weight of the solids in the negative electrode mixture slurry.

The binder is a component for assisting in coupling between a conductive material, an active material and a current collector. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber, a fluoro rubber, and various copolymers thereof.

Typically, the binder may be included in an amount of 1 to 20 wt%, preferably 1 to 15 wt%, and more preferably 1 wt% to 10 wt%, based on the total weight of the solids excluding the solvent in the negative electrode mixture slurry.

The conductive material is a component for further improving the conductivity of the negative electrode active material, and may be added in an amount of 1 to 20 wt% based on the total weight of the solids in the negative electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite with a well-developed crystal structure, artificial graphite, graphite, or the like; conductive fibers such as carbon fiber or metal fiber; conductive powder such as fluorocarbon powder, aluminum powder, and nickel powder; a conductive whiskers such as zinc oxide and potassium titanate; conductive metal oxides such as titanium oxide; conductive materials such as a polyphenylene derivative, and the like may be used.

Typically, the binder may be included in an amount of 1 to 20 wt%, preferably 1 to 15 wt%, and more preferably 1 wt% to 10 wt%, based on the total weight of the solids excluding the solvent in the negative electrode mixture slurry.

The solvent may include water or an organic solvent such as N-methyl-2-pyrrolidone (NMP), and may be used in an amount such that a preferred viscosity is achieved when the negative electrode active material, and optionally, a binder, a conductive material, and the like are included. For example, the solvent may be included in an amount such that the concentration of a solid including the negative electrode active material, and optionally the binder and the conductive material is 50 wt% to 95 wt%, preferably 70 wt% to 90 wt%.

As the negative electrode, when a metal itself is used, the negative electrode maybe manufactured by physically bonding, roll-pressing, or depositing a metal on a metal thin film itself or the negative electrode current collector. The depositing method may be electrical vapor deposition or chemical vapor deposition.

For example, the metal bonded/roll-pressed/deposited on the metal thin film itself or the negative electrode current collector may include one type of metal selected from lithium (Li), nickel (Ni), tin (Sn), copper (Cu), or indium (In), or an alloy of two types of metals thereof.

**(3) Separator**

In addition, as the separator, a common porous polymer film typically used as a separator, for example, a porous polymer film prepared with a polyolefin-based polymer, such as an ethylene homopolymer, a propylene homopolymer, an ethylene/butene copolymer, an ethylene/hexene copolymer, and an ethylene/methacrylate copolymer may be used alone, or in a laminated form thereof. Alternatively, a typical porous non-woven fabric, for example, a non-woven fabric

formed of a glass fiber having a high melting point or polyethylene terephthalate fiber may be used, but the present disclosure is not limited thereto. Also, a coated separator including a ceramic component or a polymer material may be used to secure heat resistance or mechanical strength, and may be optionally used in a single-layered or a multi-layered structure.

A shape of the lithium secondary battery of the present disclosure is not particularly limited, but a cylindrical type using a can, a prismatic type, a pouch type, or a coin type may be used.

Hereinafter, the present disclosure will be described in detail, according to examples. However, the invention may be embodied in many different forms and should not be construed as being limited to the embodiments set forth herein. It will be apparent to those skilled in the art that various modifications and alterations may be possible without departing from the scope and spirit of the present disclosure, and such modifications and alterations are duly included in the present disclosure as defined by the appended claims.

## Examples

### Example 1

(Preparation of Non-Aqueous Electrolyte)

A non-aqueous solvent was prepared by using an organic solvent (ethylene carbonate (EC):ethylmethyl carbonate (EMC): diethyl carbonate (DEC) = 20:70:10 volume ratio) to dissolve $LiPF_6$ to be 1.2M and to 99.5 g of the non-aqueous solvent, 0.5 g of a compound of Formula 1a below was introduced to prepare a non-aqueous electrolyte.

[Formula 1a]

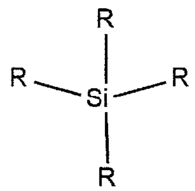

R has a structure represented by Formula 2-1 below.

[Formula 2-1]

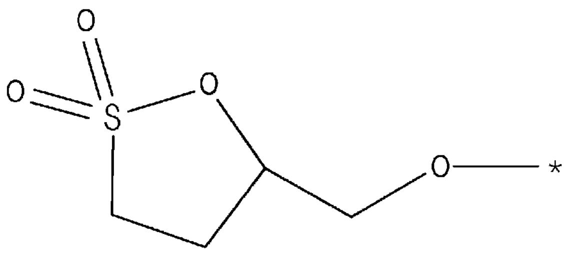

)

(Preparation of Lithium Secondary Battery)

A positive electrode active material ($LiNi_{0.60}Co_{0.10}Mn_{0.30}O_2$), a conductive material (carbon black), and a binder(polyvinylidene fluoride) were added to N-methyl-2-pyrrolidone (NMP) as a solvent, at a weight ratio of 97.6:0.8:1.6 to prepare a positive electrode slurry (solid content: 60 wt%). The positive electrode slurry was applied on one surface of a positive electrode current collector (Al thin film) having a thickness of 13.5 μm, dried and then roll-pressed to prepare a positive electrode.

A negative electrode active material (graphite : SiO = 97.5:2.5 weight ratio), a conductive material (carbon black) and a binder (SBR-CMC) were added in a weight ratio of 95.6:1.0:3.4 to N-methyl-2-pyrrolidone (NMP), which was a solvent, to prepare a negative electrode slurry (solid content 60 wt%). The negative electrode slurry was applied on one surface of a negative electrode current collector (Cu thin film) having a thickness of 6 μm, dried and then roll-pressed to

prepare a negative electrode.

In a dry room, a porous polymer separator was interposed between the positive electrode and the negative electrode prepared above, and then the prepared non-aqueous electrolyte was injected thereto to prepare a secondary battery.

**Example 2**

A secondary battery was prepared in the same manner as in Example 1 except that 0.5g of the compound of Formula 1-1a below was introduced to 99.5g of the non-aqueous solvent prepared in Example 1 to prepare a non-aqueous electrolyte.

**[00192]** [Formula 1- 1a]

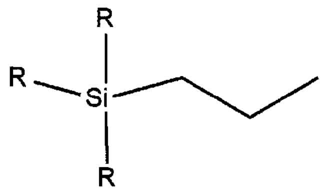

R has a structure represented by Formula 2-1 below.

[Formula 2-1]

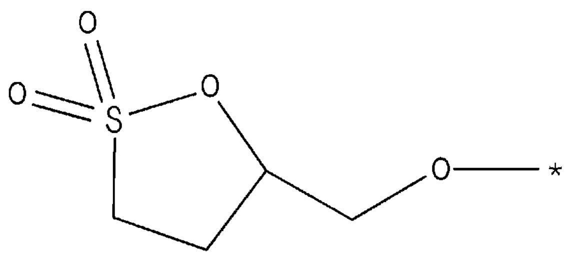

)

Example 3

A secondary battery was prepared in the same manner as in Example 1 except that 0.5g of the compound of Formula 1-1d below was introduced to 99.5g of the non-aqueous solvent prepared in Example 1 to prepare a non-aqueous electrolyte.

[Formula 1-1d]

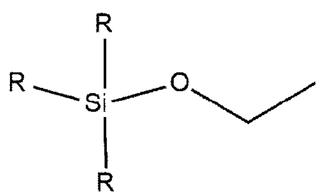

R has a structure represented by Formula 2-1 below.

[Formula 2-1]

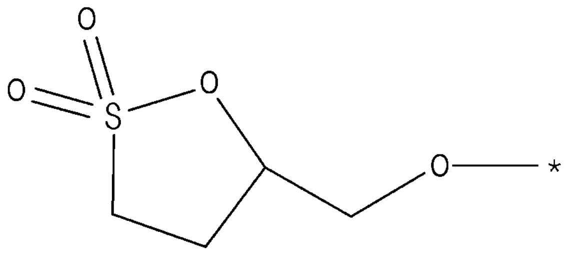

)

Example **4**

A secondary battery was prepared in the same manner as in Example 1 except that 0.5g of the compound of Formula 1-2a below was introduced to 99.5g of the non-aqueous solvent prepared in Example 1 to prepare a non-aqueous electrolyte.

[Formula 1- 2a]

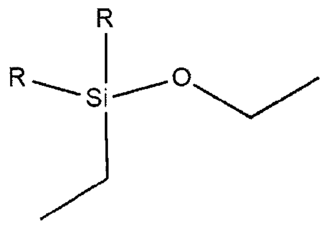

R has a structure represented by Formula 2-1 below.

[Formula 2-1]

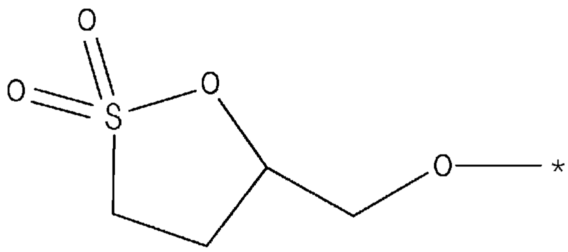

)

**Example 5**

A secondary battery was prepared in the same manner as in Example 1 except that 0.5g of the compound of Formula 1-2b below was introduced to 99.5g of the non-aqueous solvent prepared in Example 1 to prepare a non-aqueous electrolyte.

[Formula 1-2b]

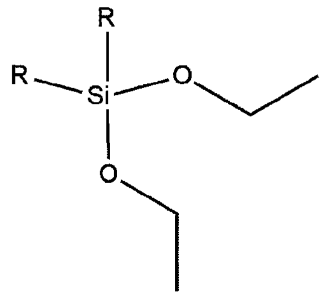

R has a structure represented by Formula 2-1 below.

[Formula 2-1]

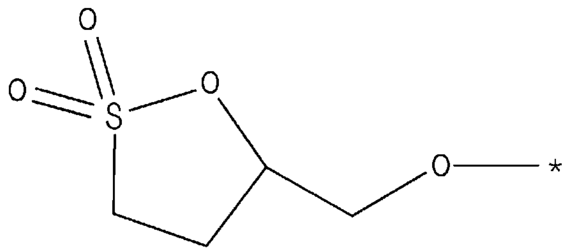

)

## Example 6

A secondary battery was prepared in the same manner as in Example 1 except that 0.5g of the compound of Formula 1-2c below was introduced to 99.5g of the non-aqueous solvent prepared in Example 1 to prepare a non-aqueous electrolyte.

[Formula 1-2c]

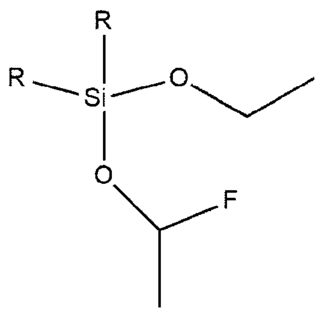

R has a structure represented by Formula 2-1 below.

[Formula 2-1]

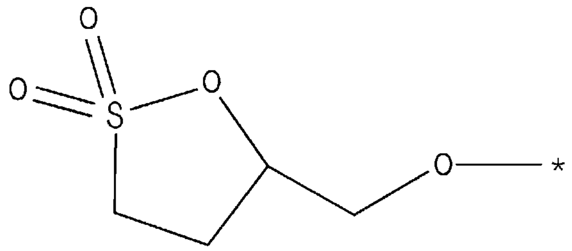

)

### Example 7

A secondary battery was prepared in the same manner as in Example 1 except that 0.5g of the compound of Formula 1-2d below was introduced to 99.5g of the non-aqueous solvent prepared in Example 1 to prepare a non-aqueous electrolyte.

[Formula 1-2d]

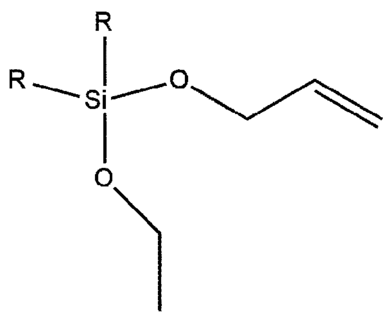

R has a structure represented by Formula 2-1 below.

[Formula 2-1]

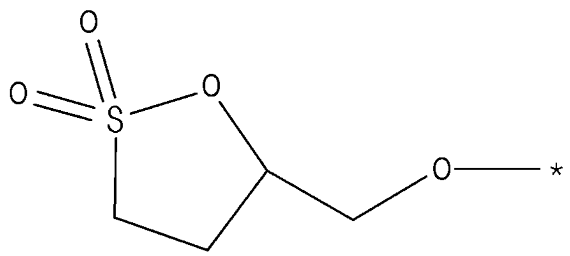

)

### Comparative Example 1

A secondary battery was prepared in the same manner as in Example 1 except that 100 g of the non-aqueous solvent prepared in Example 1 was used to prepare a non-aqueous electrolyte.

### Comparative Example 2

A secondary battery was prepared in the same manner as in Example 1 except that 0.5g of 1,3-propane sultone was introduced to 99.5g of the non-aqueous solvent prepared in Example 1 to prepare a non-aqueous electrolyte.

**Comparative Example 3**

A secondary battery was prepared in the same manner as in Example 1 except that 0.5g of the compound of Formula A below was introduced to 99.5g of the non-aqueous solvent prepared in Example 1 to prepare a non-aqueous electrolyte.

[Formula A]

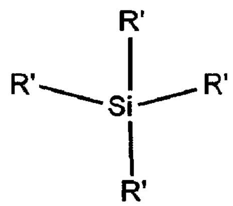

R' has a structure represented by Formula B below.

[Formula B]

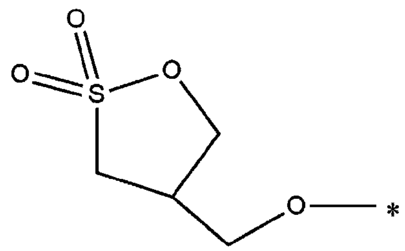

)

**Experimental Example 1 - Evaluation of High-Temperature Cycle Properties(1)**

After a formation process was performed at a 0.1 C rate for 3 hours at 25°C on each of the lithium secondary batteries prepared in Examples 1 to 7 and the second batteries prepared in Comparative Examples 1 to 3, they were charged at a 0.33 C rate to 4.4 V under a CC-CV (constant current-constant voltage) condition at 25°C, and were discharged at a 0.33 C rate to 2.5V under a CC condition. The charging and discharging were set as one cycle, and then three cycles of initial charging and discharging were performed.
Subsequently, each of the initially charged and discharged lithium secondary batteries was charged at a 0.33C rate to 4.4V under a CC-CV condition at high temperatures (45°C), and was discharged at a 0.33C rate to 2.5V under a CC condition. The charging and discharging were set as one cycle and 100 cycles thereof were performed.
The capacity after the 1st cycle and the capacity after the100th cycle were substituted into Equation 1 below to calculate the capacity retention rate. The results are presented in Table 2 below.

Capacity retention rate(%) = (discharge capacity after 100th cycles/discharge capacity after 1st cycle) × 100 [Equation 1]

**Experimental Example 2 - Evaluation of High-Temperature Cycle Properties(2)**

The lithium secondary batteries prepared in Examples 1 to 7 and the secondary batteries prepared in Comparative Examples 1 to 3 were charged at a 0.33C rate to 4.4V under a CC-CV condition at 25°C, respectively, and were discharged at a 0.33C rate to 2.5V under a CC condition. The charging and discharging were set as one cycle, and then three cycles of initial charging and discharging were performed. The SOC (State Of Charge) was set to 50% based on the discharge capacity of the 3rd cycle of the charging and discharging. At SOC (State Of Charge) 50%, the DC internal resistance was calculated through the voltage drop that appeared when a discharge pulse of 2.5C was applied for 10 seconds, during which the resistance was set as the initial resistance.
Subsequently, each of the initially charged and discharged lithium secondary batteries was charged at a 0.33C rate to 4.4V under a CC-CV condition at high temperatures (45°C), and was discharged at a 0.33C rate to 2.5V under a CC condition. After the charging and discharging was set as one cycle and the cycle was performed 100 times, each of the

lithium secondary batteries was then transferred to a charger/discharger at room temperature (25°C), and the DC internal resistance was then calculated through the voltage drop that appeared when a discharge pulse of 2.5C was applied for 10 seconds at SOC (State Of Charge) 50%.

The initial resistance and the resistance after the 100th cycle were substituted into Equation 2 below to calculate the high-temperature cycle resistance increase rate. The results are presented in Table 2 below.

Resistance increase rate(%) = { (resistance after 100 cycles - initial resistance)/initial resistance} × 100 [Equation 2]

[Table 1]

| | Experimental Example 1 Capacity retention rate (%) | Experimental Example 2 Resistance increase rate (%) |
|---|---|---|
| Example 1 | 96.7 | 7.9 |
| Example 2 | 95.9 | 8.3 |
| Example 3 | 94.6 | 8.9 |
| Example 4 | 95.6 | 13.8 |
| Example 5 | 95.1 | 14.6 |
| Example 6 | 94.9 | 12.7 |
| Example 7 | 95.8 | 15.2 |
| Comparative Example 1 | 90.1 | 21.1 |
| Comparative Example 2 | 91.4 | 20.3 |
| Comparative Example 3 | 88.3 | 23.8 |

As shown in Table 1, it can be understood that Examples 1 to 7, using the additive for a non-aqueous electrolyte of the present disclosure, have improved capacity retention rates and resistance increase rates compared to Comparative Examples 1 to 3, which did not use the additive. In the case of the additive of the present disclosure, in which the linker is connected to the 3rd carbon of propane sultone, the overall length of the additive became longer compared to the additive of Formula A, in which the linker is connected to the 4th carbon of propane sultone. Accordingly, the lithium secondary batteries of Examples 1 to 7 including the additive of the present disclosure increase the area covered by the film on the positive/negative electrodes so that the high-temperature life properties are considered to be superior compared to the lithium secondary battery of Comparative Example 3.

**Experimental Example 3 - Evaluation of High-Temperature Storage Properties(1)**

The lithium secondary batteries prepared in Examples 1 to 7 and the second batteries prepared in Comparative Examples 1 to 3 were charged at a 0.33C rate to 4.4V under a CC-CV condition at 25°C, and were discharged at a 0.33C rate to 2.5V under a CC condition. The charging and discharging were set as one cycle, and then three cycles of initial charging and discharging were performed. The discharge capacity of each of the 3rd charging and discharging was set as the initial discharge capacity. Subsequently, they were charged at a 0.33C rate to 4.4V under a CC-CV condition, and then stored at 60°C for 5 weeks.

After transferring each of the lithium secondary batteries to a charger/discharger at room temperature (25°C), they were then charged at a 0.33C rate to 4.4V under a CC-CV condition, and were discharged at a 0.33C rate to 2.5V under a CC condition. The discharge capacity of the 3rd cycle of charging and discharging and the initial capacity were substituted into Equation 3 below to calculate the high-temperature storage capacity retention rate. The results are presented in Table 2 below.

Capacity retention rate(%) = (discharge capacity after high- temperature storage for 5 weeks/initial discharge capacity) × 100 [Euqation 3]

**Experimental Example 4 - Evaluation of High-Temperature Storage Properties(2)**

The lithium secondary batteries prepared in Examples 1 to 7 and the second batteries prepared in Comparative Examples 1 to 3 were charged at a 0.33C rate to 4.4V under a CC-CV condition at 25°C, and were discharged at a 0.33C rate to 2.5V under a CC condition. The charging and discharging were set as one cycle, and then three cycles of initial charging and discharging were performed. The SOC (State Of Charge) was set to 50% based on the discharge capacity of the 3rd cycle of the charging and discharging. At SOC (State Of Charge) 50%, the DC internal resistance was calculated through the voltage drop that appeared when a discharge pulse of 2.5C was applied for 10 seconds, during which the resistance was set as the initial resistance. Subsequently, they were charged at a 0.33C rate to 4.4V under a CC-CV condition, and then stored at 60°C for 5 weeks.

After transferring each of the lithium secondary batteries to a charger/discharger at room temperature (25°C), the DC internal resistance was calculated through the voltage drop that appeared when a discharge pulse of 2.5C was then applied for 10 seconds.

The initial resistance and the high-temperature storage resistance were substituted into Equation 4 below to calculate the high-temperature storage resistance increase rate. The results are presented in Table 2 below.

Resistance increase rate(%) = {(resistance after high-temperature storage for 5 weeks- initial resistance)/initial resistance} $\times$ 100 [Equation 4]

**Experimental Example 5 - Evaluation of High-Temperature Storage Properties(3)**

The lithium secondary batteries prepared in Examples 1 to 7 and the second batteries prepared in Comparative Examples 1 to 3 were charged at a 0.33C rate to 4.4V under a CC-CV condition at 25°C, respectively, and the volume was measured by the buoyancy method at room temperature. This was set as the initial volume (0%). After storing the volume measured batteries at 60°C for 5 weeks and then transferring them to a charger and discharger at room temperature (25°C), they were fully charged at a 0.33C rate to 4.4V under a CC-CV condition at 25°C, and the volume was measured by the buoyancy method. The initial volume and the high-temperature storage volume were substituted into Equation 5 below to calculate the high-temperature storage volume increase rate. The results are presented in Table 2 below.

Volume increase rate (%) = {(volume after high-temperature storage for 5 weeks- initial volume)/initial volume} $\times$ 100 [Equation 5]

[Table 2]

| | Experimental Example 3 Capacity retention rate (%) | Experimental Example 4 Resistance increase rate (%) | Experimental Example 5 Volume increase rate (5) |
|---|---|---|---|
| Example 1 | 97.3 | 10.7 | 10.5 |
| Example 2 | 96.9 | 14.8 | 15.9 |
| Example 3 | 96.8 | 15.3 | 14.7 |
| Example 4 | 96.4 | 17.3 | 18.5 |
| Example 5 | 95.8 | 18.7 | 17.2 |
| Example 6 | 96.5 | 19.5 | 18.1 |
| Example 7 | 95.5 | 18.1 | 19.3 |
| Comparative Example 1 | 87.3 | 28.9 | 38.3 |
| Comparative Example 2 | 89.1 | 27.3 | 33.1 |
| Comparative Example 3 | 85.8 | 31.3 | 40.5 |

As shown in Table 2, it can be understood that the secondary batteries of Examples 1 to 7 have improved capacity retention rates, resistance increase rates, and volume increase rates after 5 weeks compared to those of Comparative Examples 1 to 3. The additive of the present disclosure, in which the linker is connected to the 3rd carbon of propane sultone, increased the overall length of the additive, compared to the additive of Formula A, in which the linker is connected

to the 4th carbon of propane sultone. Accordingly, the lithium secondary batteries of Examples 1 to 7 including the additive of the present disclosure increase the area covered by the film on the positive/negative electrodes so that the high-temperature storage properties are considered to be superior compared to the lithium secondary battery of Comparative Example 3.

## Claims

1. A non-aqueous electrolyte, comprising a lithium salt, an organic solvent and a compound of Formula 1 as an additive:

[Formula 1]

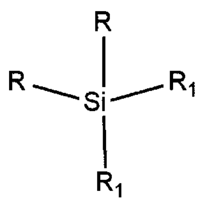

wherein, in Formula 1 above, $R_1$ is any one selected from a group consisting of F, R, an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, OR' and OCOR',
R' is any one selected from a group consisting of an alkyl group having 1 to 10 carbon atoms in which can be substituted with one or more fluorines, an alkenyl group having 2 to 10 carbon atoms which can be substituted with one or more fluorines, and an alkynyl group having 2 to 10 carbon atoms which can be substituted with one or more fluorines, and
R has a structure represented by Formula 2,

[Formula 2]

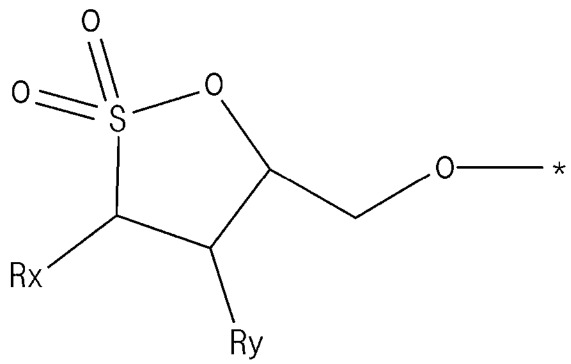

wherein, in Formula 2, Rx and Ry are each independently either H or F.

2. The non-aqueous electrolyte of claim 1,
wherein R has a structure represented by Formula 2-1.

[Formula 2-1]

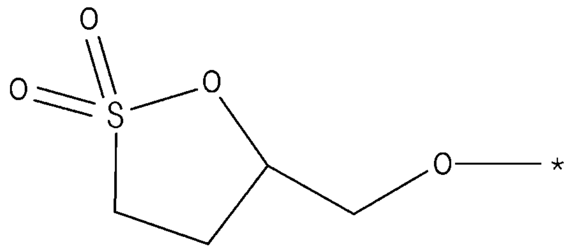

.

3. The non-aqueous electrolyte of claim 1,

wherein the compound of Formula 1 is a compound of Formula 1a,

[Formula 1a]

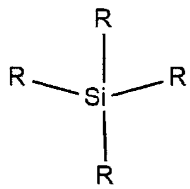

wherein, in Formula 1a, R has a structure represented by Formula 2-1.

[Formula 2-1]

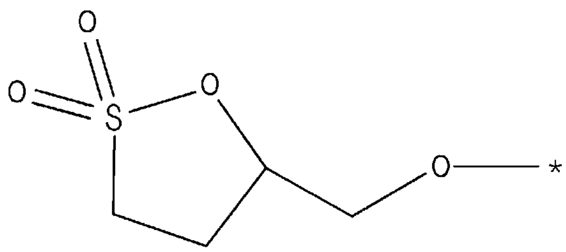

.

4. The non-aqueous electrolyte of claim 1,

wherein the compound of Formula 1 is a compound of Formula 1-1,

[Formula 1-1]

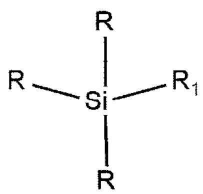

wherein, in Formula 1-1, $R_1$ is any one selected from a group consisting of an alkyl group having 1 to 10 carbon atoms in which can be substituted with one or more fluorines, an alkenyl group having 2 to 10 carbon atoms which

can be substituted with one or more fluorines, an alkynyl group having 2 to 10 carbon atoms which can be substituted with one or more fluorines, and OR',

R' is any one selected from a group consisting of an alkyl group having 1 to 10 carbon atoms in which can be substituted with one or more fluorines, an alkenyl group having 2 to 10 carbon atoms which can be substituted with one or more fluorines, and an alkynyl group having 2 to 10 carbon atoms which can be substituted with one or more fluorines, and

R has a structure represented by Formula 2-1.

[Formula 2-1]

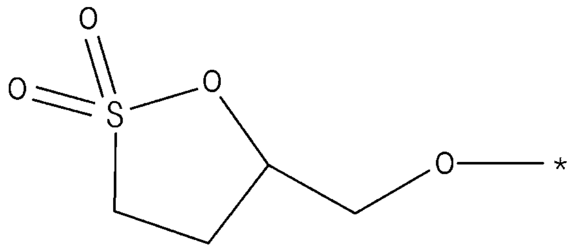

**5.** The non-aqueous electrolyte of claim 4,

wherein the compound represented by Formula 1-1 is any one of compounds represented by Formulas 1-1a to 1-1e,

[Formula 1- 1a]

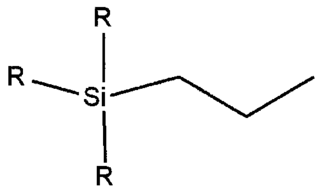

[Formula 1-1b]

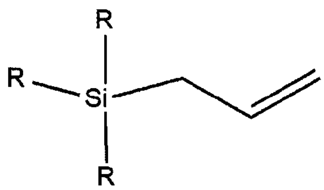

[Formula 1-1c]

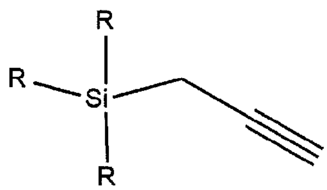

[Formula 1-1d]

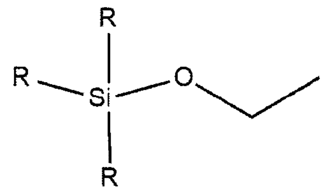

[Formula 1-1e]

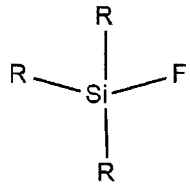

wherein, in Formulas 1-1a to 1-1e, R has a structure represented by Formula 2-1.

[Formula 2-1]

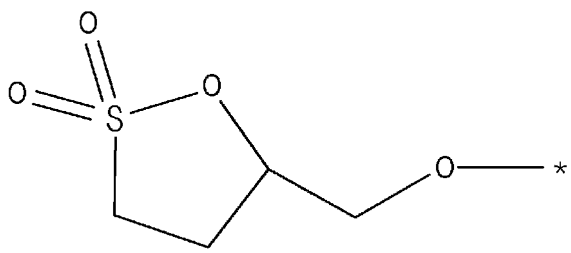

**6.** The non-aqueous electrolyte of claim 1,

wherein $R_1$ is any one selected from a group consisting of an alkyl group having 1 to 10 carbon atoms in which can be substituted with one or more fluorines, an alkenyl group having 2 to 10 carbon atoms which can be substituted with one or more fluorines, an alkynyl group having 2 to 10 carbon atoms which can be substituted with one or more fluorines, and OR',

R' is any one selected from a group consisting of an alkyl group having 1 to 10 carbon atoms in which can be substituted with one or more fluorines, an alkenyl group having 2 to 10 carbon atoms which can be substituted with one or more fluorines, and an alkynyl group having 2 to 10 carbon atoms which can be substituted with one or more fluorines, and

R has a structure represented by Formula 2-1.

[Formula 2-1]

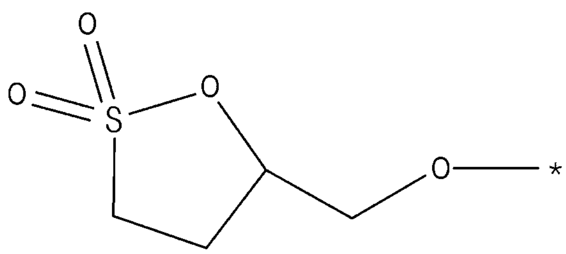

.

**7.** The non-aqueous electrolyte of claim 6,

wherein the compound of Formula 1 is any one of compounds represented by Formulas 1-2a to 1-2d,

[Formula 1- 2a]

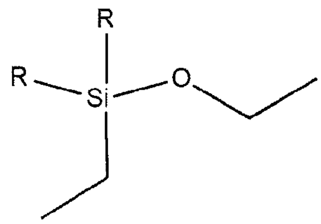

[Formula 1-2b]

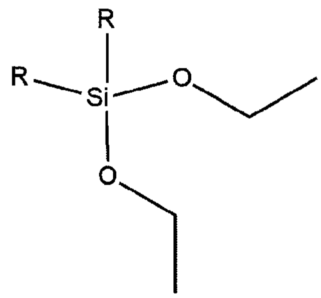

[Formula 1-2c]

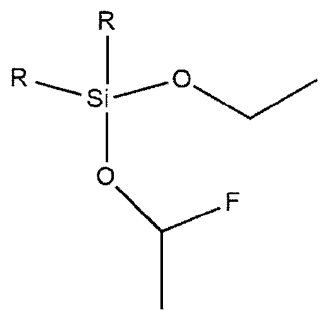

[Formula 1-2d]

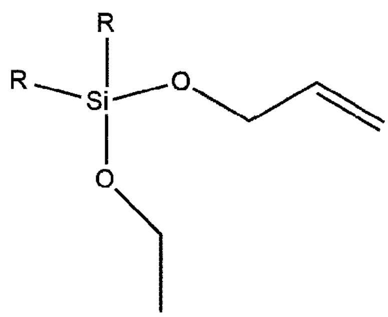

wherein R has a structure represented by Formula 2-1.

[Formula 2-1]

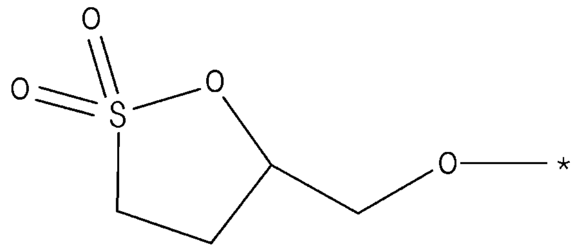

.

**8.** The non-aqueous electrolyte of claim 1, wherein the compound of Formula 1 is included in an amount of 0.1 parts by weight to 5 parts by weight based on 100 parts by weight of the non-aqueous electrolyte.

**9.** The non-aqueous electrolyte of claim 1, wherein the lithium salt is one or more selected from $LiPF_6$, LiCl, LiBr, LiI, $LiBF_4$, $LiClO_4$, $LiB_{10}Cl_{10}$, $LiAlCl_4$, $LiAlO_2$, $LiSO_3CH_3$, $LiSO_3CF_3$, $LiCO_2CH_3$, $LiCO_2CF_3$, $LiAsF_6$, $LiSbF_6$, $LiN(SO_2F)_2$ $LiN(SO_2CF_2CF_3)_2$ and $LiN(SO_2CF_3)_2$.

**10.** The non-aqueous electrolyte of claim 1, wherein the lithium salt is included at a mole concentration of 0.5 M to 4.0 M.

**11.** The non-aqueous electrolyte of claim 1, wherein the organic solvent includes at least one selected from a cyclic carbonate-based organic solvent, a linear carbonate-based organic solvent, a linear ester-based organic solvent and a cyclic ester-based organic solvent.

**12.** The non-aqueous electrolyte of claim 1, further comprising at least one selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound as an additive.

**13.** A lithium secondary battery comprising a positive electrode;

a negative electrode, and
the non-aqueous electrolyte of any one of claims 1 to 12.

**14.** The lithium secondary battery of claim 13,

wherein the positive electrode includes a lithium nickel-based oxide represented by Formula 3 as a positive electrode active material,

[Formula 3] $Li_aNi_bCo_cM^1_dM^2_eO_2$

wherein, in Formula 1, $M^1$ is Mn, Al or a combination thereof, and $M^2$ is one or more selected from the group consisting of Zr, W, Ti, Mg, Ca, Sr, and Ba, where $0.8 \leq a \leq 1.2$, $0.8 \leq b < 1$, $0 < c < 0.2$, $0 < d < 0.2$, and $0 \leq e \leq 0.1$.

**15.** The lithium secondary battery of claim 13, wherein the negative electrode includes any one or more selected from a group consisting of Si, Si-C and $SiO_x$($0 < x \leq 2$) as a negative electrode active material.

## INTERNATIONAL SEARCH REPORT

International application No. **PCT/KR2024/014117**

**A. CLASSIFICATION OF SUBJECT MATTER**

**H01M 10/0567**(2010.01)i; **H01M 10/0568**(2010.01)i; **H01M 10/0569**(2010.01)i; **H01M 10/052**(2010.01)i; **H01M 4/525**(2010.01)i; **H01M 4/48**(2010.01)i; **H01M 4/38**(2006.01)i

According to International Patent Classification (IPC) or to both national classification and IPC

**B. FIELDS SEARCHED**

Minimum documentation searched (classification system followed by classification symbols)

H01M 10/0567(2010.01); H01M 10/0525(2010.01); H01M 10/42(2006.01); H01M 10/52(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비수 전해질(non-aqueous electrolyte), 리튬염(lithium salt), 첨가제(additive), 프로판설톤(propane sultone), 실리콘계 연결기(silicon-based linker), 고체전해질계면(SEI, solid electrolyte interphase), 리튬 이차전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| X | CN 115911545 A (SHENZHEN CAPCHEM TECHNOLOGY CO., LTD.) 04 April 2023 (2023-04-04) See claims 1, 3 and 6-10; paragraphs [0095], [0098], [0106], [0108], [0115] and [0130]; and example 1. | 1-3,8-15 |
| A | | 4-7 |
| A | KR 10-2022-0030575 A (TECHNIUM CO., LTD. et al.) 11 March 2022 (2022-03-11) See claims 1-10. | 1-15 |
| A | KR 10-2020-0062016 A (DONGWOO FINE-CHEM CO., LTD.) 03 June 2020 (2020-06-03) See claims 1-10. | 1-15 |
| A | CN 112018446 A (ZHUHAI COSMX BATTERY CO., LTD.) 01 December 2020 (2020-12-01) See claims 1-10. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 December 2024** | **19 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/014117**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0005112 A (TECHNIUM CO., LTD. et al.) 13 January 2022 (2022-01-13) See claims 1-10. | 1-15 |

Form PCT/ISA/210 (second sheet) (July 2022)

**INTERNATIONAL SEARCH REPORT**
**Information on patent family members**

International application No.
**PCT/KR2024/014117**

| Patent document cited in search report | Publication date (day/month/year) | Patent family member(s) | Publication date (day/month/year) |
|---|---|---|---|
| CN 115911545 A | 04 April 2023 | WO 2023-020323 A1 | 23 February 2023 |
| KR 10-2022-0030575 A | 11 March 2022 | KR 10-2467447 B1 | 15 November 2022 |
| | | WO 2022-050740 A1 | 10 March 2022 |
| KR 10-2020-0062016 A | 03 June 2020 | CN 113169376 A | 23 July 2021 |
| | | CN 113169376 B | 14 May 2024 |
| | | EP 3890092 A1 | 06 October 2021 |
| | | JP 2022-510186 A | 26 January 2022 |
| | | JP 7194281 B2 | 21 December 2022 |
| | | KR 10-2138128 B1 | 27 July 2020 |
| | | US 12113170 B2 | 08 October 2024 |
| | | US 2021-0399343 A1 | 23 December 2021 |
| | | WO 2020-111633 A1 | 04 June 2020 |
| CN 112018446 A | 01 December 2020 | CN 112018446 B | 01 July 2022 |
| KR 10-2022-0005112 A | 13 January 2022 | KR 10-2463257 B1 | 04 November 2022 |
| | | WO 2022-010227 A1 | 13 January 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230127481
- KR 1020240125976